# EUROPÄISCHE PATENTSCHRIFT

(11) **EP 0 889 806 B1**
(45) Veröffentlichungstag und Bekanntmachung des Hinweises auf die Patenterteilung: **02.05.2002**
(21) Anmeldenummer: 97903240.6
(22) Anmeldetag: 10.02.1997
(51) Int. Cl.: B60R 21/22

(54) **ANORDNUNG EINES AUFBLASBAREN KOPFSCHUTZSYSTEMES IN EINEM KRAFTFAHRZEUG**
ARRANGEMENT OF AN INFLATABLE HEAD-PROTECTION SYSTEM IN A MOTOR VEHICLE
CONFIGURATION D'UN SYSTEME GONFLABLE DE PROTECTION DE LA TETE DANS UNE AUTOMOBILE

(30) Priorität: 27.03.1996 DE 19612227
(43) Veröffentlichungstag der Anmeldung: 13.01.1999
(73) Patentinhaber: Bayerische Motoren Werke Aktiengesellschaft, 80788 München (DE)
(72) Erfinder: STAVERMANN, Joerg, D-80331 München (DE)
(86) Internationale Anmeldenummer: EP9700572
(87) Internationale Veröffentlichungsnummer: WO9735746

(56) Entgegenhaltungen:
- EP-A- 0 694 444
- EP-A- 0 705 738
- DE-A- 3 422 263
- DE-U- 29 605 897
- FR-A- 2 238 343
- FR-A- 2 345 316
- US-A- 2 834 606

## Beschreibung

Die Erfindung betrifft die Anordnung eines aufblasbaren Kopfschutzsystemes in einem Kraftfahrzeug, mit einem Luftsack, der zumindest teilweise längs eines Holmes oder einer Säule der Fahrzeug-Karosse im nicht aufgeblasenen Zustand dessen/deren Verlauf folgend vorgesehen ist. Zum bekannten Stand der Technik wird lediglich beispielshalber auf die WO 94/19215 verwiesen.

Der nächstliegende Stand der Technik, FR-A-2 345 316, zeigt unter anderem eine Anordnung eines aufblasbaren Kopfschutz-systemes gemäß dem Oberbegriff des Anspruchs 1, mit einer Blendschutzeinrichtung für die Windschutzscheibe, bei dem ein Luftsack mit einer Aufprall dämpfenden Dachinnenverkleidung zusammenwirkt, um bei einem Kopfaufprall die Stoßkraft zu absorbieren.

Außerdem beschreibt die DE-A-34 22 263 eine Sicherheitseinrichtung zum Schutz von Fahrzeuginsassen bei einem Seitenaufprall, bei der unter anderem eine zusammengefaltete, aufblasbare Hülle an der Innenseite eines Dachholms angebracht ist und von einem Verkleidungsteil einer Dachinnenverkleidung abgedeckt wird. Die Stoßkraft auf das Verkleidungsteil wird von der aufgeblasenen Hülle absorbiert.

Ein aufblasbares Kopfschutzsystem nach der DE-A-3 422 263 bietet den Insassen des Kraftfahrzeuges guten Schutz, wenn der Luftsack tatsächlich aufgeblasen ist bzw. wurde. Jedoch sind auch Fälle denkbar, in denen ein Fahrzeuginsasse insbesondere mit seinem Kopf gegen eine Karosserie-Säule oder einen Holm, insbesondere Dachholm prallt, ohne daß es vorher zu einer Aktivierung des aufblasbaren Kopfschutzsystemes gekommen ist. Auch derartige Fälle gilt es abzudecken, nicht nur unter Berücksichtigung der gesetzlich vorgeschriebenen statischen Kopfaufschlagprüfungen. Grundsätzlich ist es bekannt, daß die Erfordernisse dieser Kopfaufschlagprüfungen durch energieabsorbierende Polster - in der Regel sind dies Kunststoffschaumsysteme - im Bereich der Dachsäulen und des oberen Seitenrahmens eines üblichen Personenkraftwagens erfüllt werden können. Würde man nun diese beiden bekannten Systeme, nämlich energieabsorbierende Polster einerseits und einen aufblasbaren Luftsack andererseits, einfach miteinander kombinieren, so würde hierfür relativ viel Bauraum benötigt, wie in FR 2 345 316. Die sogenannten Komfortmaße, das heißt die Innenmaße des Kraftfahrzeuges/Personenkraftwagens würden hierdurch gewaltig eingeschränkt. Aufgabe der Erfindung ist es daher, Abhilfemaßnahmen für die beschriebene Problematik aufzuzeigen.
Zur Lösung dieser Aufgabe ist vorgesehen, daß der Luftsack (des aufblasbaren Kopfschutzsystemes) von einem separaten Deformationselement gehalten ist, wobei des Deformationselement ein eine Deformations wölbung aufweisendes Blechformteil ist. Vorteilhafte Aus- und Weiterbildungen sind Inhalt der Unteransprüche.

Näher erläutert wird die Erfindung anhand zweier bevorzugter Ausführungsbeispiele, wobei in den beiden Figuren jeweils ein Schnitt durch einen Kraftfahrzeug-Dachholm mit angebautem Deformationselement und dazwischen untergebrachtem Luftsack gezeigt ist.

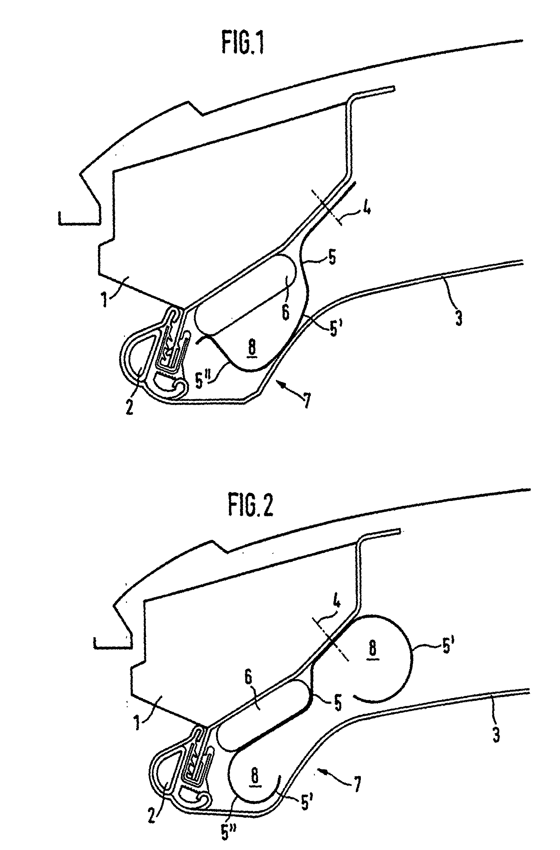

Mit der Bezugsziffer 1 ist ein Dach-Holm eines üblichen Personenkraftwagens bezeichnet, wobei dieser Schnitt gemäß den Figuren 1,2 beispielsweise im Bereich zwischen der dem Fachmann bekannten A-Säule und der B-Säule gelegt ist. An der unteren Außenseite dieses Holmes 1 befindet sich eine Dichtstruktur 2 für einen Türausschnitt. Femer ist mit der Bezugsziffer 3 eine Dachinnenverkleidung bezeichnet, unterhalb derer sich der Fahrzeuginnenraum befindet.

An der dem Fahrzeuginnenraum zugewandten Seite des Holmes 1 ist über eine Schraubverbindung 4 ein Deformationselement 5 angebracht, welches sich - ebenso wie der Holm 1 - mit seiner Längsrichtung senkrecht zur Zeichenebene erstreckt. Dabei ist dieses Deformationselement 5 von der Dachinnenverkleidung 3 verdeckt. Zwischen dem Deformationselement 5 sowie dem Holm 1 ist ein Luftsack 6 eines aufblasbaren Kopfschutzsystemes in nicht aufgeblasenem Zustand untergebracht. Dabei wird dieser Luftsack 6, der analog der WO 94/19215 ausgebildet sein und in einem Schutzschlauch verpackt sein kann, vom Deformationselement 5 gehalten.

Das Deformationselement 5 selbst ist ein Blechformteil, welches bei der Ausführungsform nach Figur 1 eine Deformationswölbung 5' und bei der Ausführungsform nach Figur, 2 zwei Deformationswölbungen 5' aufweist. Diese Deformationswölbungen 5' sind dabei derart ausgebildet, daß beim Aufprallen des Kopfes eines Fahrzeuginsassen gemäß Pfeilrichtung 7 eine energieabsorbierende Verformung dieses Deformationselementes erfolgt, so daß dieser Kopfaufprall dämpfend abgefangen wird. Das Verletzungsrisiko eines Fahrzeuginsassen wird hierdurch minimiert. Gleichzeitig ist zumindest ein Schenkel 5" dieses Deformationselementes derart weich bzw. flexibel ausgebildet, daß dieser Schenkel 5" durch einen Aufblasevorgang des Luftsackes 6 verformt wird und im wesentlichen gegen Pfeilrichtung 7 weggebogen wird, um es dem Luftsack 6 zu ermöglichen, sich aus dieser gezeigten Ruheposition hinauszuschälen und in die aufgeblasene und dabei seine Schutzfunktion ausübende Position zu gelangen. Diese Position kann beispielsweise so sein, wie in der bereits mehrfach genannten WO 94/19215 gezeigt. Selbstverständlich wird bei diesem Aufblasevorgang des Luftsackes 6 auch die Dachinnenverkleidung 3 entgegen Pfeilrichtung 7 wegbewegt.

Um die Dämpfungswirkung des Deformationselementes 5 noch weiter zu steigern, kann ein von diesem Deformationselement 5 bzw. von diesem Blechformteil gebildeter Hohlraum 8 - beim Ausführungsbeispiel nach Figur 2 sind zwei derartige Hohlräume 8 vorgesehen - zusätzlich mit Schaummaterial ausgefüllt sein. Wenngleich dieser Hohlraum 8 kein allseitig geschlossener Raum ist, somit also quasi offen ist, ist doch sichergestellt, daß bei einer Verformung des Deformationselementes 5 - sei es nun durch einen Aufprall gemäß Pfeilrichtung 7 oder durch ein Aufblasen des Luftsackes 6 - kein Abbröckeln des Schaummaterials in den Fahrzeuginnenraum gelangen kann, da ein Partikelflug von Schaum-Bröseln unerwünscht ist. Durch dieses als Blechformteil ausgebildete Deformationselement 5 wird somit das eine zusätzliche Dämpfungsfunktion ausübende Schaummaterial zurückgehalten und am Zerbröseln gehindert.

Bei der beschriebenen Anordnung werden somit Synergieeffekte in der Form genutzt, daß ein erforderliches Deformationselement, nämlich das Element 5 gleichzeitig in der Lage ist, den Luftsack 6 eines aufblasbaren Kopfschutzsystemes zu halten. Dabei sind die als Blechformteile ausgebildeten Deformationselemente 5 derart ausgelegt, daß sie sich - beispielsweise auch beim Anschlagen eines Prüfkörpers im Rahmen der eingangs beschriebenen Kopfaufschlagprüfungen - gezielt verformen und dabei Energie umsetzen. Gleichzeitig sind diese Deformationselemente 5 derart geformt, daß sie den sich im Dachbereich des Kraftfahrzeuges befindenden Luftsacks 6 im Ruhezustand in Konstruktionslage fixieren und bei einer Auslösung dieses Kopfschutzsystemes, das heißt dann, wenn der Luftsack 6 aufgeblasen wird, diesen in Richtung des Fahrzeuginnenraumes freigeben. Dabei kann diese Anordnung nicht nur - wie gezeigt und beschrieben - im Bereich des Dachholmes 1 eines Personenkraftwagens erfolgen, sondern auch im Bereich der A-Säule, der B-Säule und der C-Säule. Stets wird der zur Verfügung stehende Bauraum optimal genutzt, wobei als weitere Vorteile eine reduzierte Variantenbildung und insbesondere auch ein verbesserter Schutz des Luftsackes 6 vor Beschädigung in Ruhezustand zu nennen sind. Sowohl das Deformationselement bzw. allgemein ein energieabsorbierendes Profil, als auch der Luftsack 6 sind auf diese Weise einfach an der Fahrzeug-Karosse zu befestigen, wobei noch darauf hingewiesen werden soll, daß selbstverständlich eine Vielzahl von Details, insbesondere konstruktiver Art, durchaus abweichend vom gezeigten Ausführungsbeispiel gestaltet sein können, ohne den Inhalt der Patentansprüche zu verlassen.

## Patentansprüche

1. Anordnung eines aufblasbaren Kopfschutzsystemes in einem Kraftfahrzeug, zwischen einer Dachinnenverkleidung (3) und einem Holm (1) oder einer Säule der Fahrzeug-Karosse, mit einem Luftsack (6), der zumindest teilweise längs des Holmes (1) oder der Säule der Fahrzeug-Karosse im nicht aufgeblasenen Zustand dessen/deren Verlauf folgend vorgesehen ist, wobei der Luftsack (6) von einem am Holm (1) oder an der Säule der Fahrzeug-Karosse befestigten Deformationselement (5), im wesentlichen zwischen diesem und dem Holm (1) oder der Säule gehalten ist, **dadurch gekennzeichnet, dass** das Deformationselement (5) ein von der Dachinnenverkleidung (3) separates, eine Deformationswölbung (5') aufweisendes Blechforrnteil ist.

2. Anordnung nach Anspruch 1, **dadurch gekennzeichnet, daß** das Deformationselement (5) am Holm (1) oder an der Säule verschraubt ist.

3. Anordnung nach Anspruch 1 oder 2,
**dadurch gekennzeichnet, daß** das Deformationselement (5) einen durch das Aufblasen des Luftsackes (6) verformbaren Schenkel (5") aufweist.

4. Anordnung nach einem der vorangegangenen Ansprüche,
**dadurch gekennzeichnet, daß** das Deformationselement (5) einen mit Schaummaterial ausgefüllten, bevorzugt offenen Hohlraum (8) aufweist.

## Claims

1. An arrangement of an inflatable head protection system in a motor vehicle between an inner roof lining (3) and a member (1) or column of the vehicle body, comprising an airbag (6) which in the non-inflated state at least partly follows the curve of the member (1) or column, wherein the airbag (6) is held substantially between the member (1) or column and a deformation element (5) fastened to the member (1) or the column, **characterised in that** the deformation element (5) is a sheet-metal welded part formed with a deformation bulge (5') and separate from the inner roof lining (3).

2. An arrangement according to claim 1, **characterised in that** the deformation element (5) is screwed to the member (1) or to the column.

3. An arrangement according to claim 1 or 2, **characterised in that** the deformation element (5) has a limb (5") which is deformable by inflating the airbag (6).

4. An arrangement according to any of the preceding claims, **characterised in that** the deformation element (5) has a preferably open cavity (8) filled with foam material.

## Revendications

1. Montage d'un système de protection gonflable de la tête dans un véhicule automobile entre un habillage intérieur (3) du toit et une traverse (1) ou une colonne de la carrosserie du véhicule, comprenant une poche gonflable (6) qui au moins en partie le long de la traverse (1) ou de la colonne de la carrosserie à l'état non gonflé en suit le tracé, la poche gonflable (6) étant tenue par un élément déformable (5) fixé à la traverse (1) ou à la colonne de la carrosserie, principalement entre cet élément et la traverse (1) ou la colonne,
**caractérisé en ce que**
l'élément déformable (5) est une pièce en tôle ayant une partie bombée de déformation (5'), distincte de l'habillage intérieur (3) du toit.

2. Montage d'un système de protection gonflable de la tête selon la revendication 1,
**caractérisé en ce que**
l'élément déformable (5) est vissé à la traverse (1) ou à la colonne.

3. Montage selon l'une quelconque des revendications 1 ou 2,
**caractérisé en ce que**
l'élément déformable (5) comporte une branche (5") déformable par gonflement de la poche gonflable (6).

4. Montage selon l'une quelconque des revendications précédentes,
**caractérisé en ce que**
l'élément déformable (5) comporte une cavité (8), de préférence ouverte, remplie d'une mousse.
